# EUROPÄISCHE PATENTSCHRIFT

(11) **EP 4 275 463 B1**
(45) Veröffentlichungstag und Bekanntmachung des Hinweises auf die Patenterteilung: **06.08.2025**
(21) Anmeldenummer: 23172314.9
(22) Anmeldetag: 09.05.2023
(51) Int. Cl.: A01B 15/20, A01B 63/02, A01B 69/00

(54) **LANDWIRTSCHAFTLICHES ARBEITSGERÄT**
AGRICULTURAL IMPLEMENT
OUTIL DE TRAVAIL AGRICOLE

(30) Priorität: 10.05.2022 DE 102022111677
(43) Veröffentlichungstag der Anmeldung: 15.11.2023
(73) Patentinhaber: Lemken GmbH & Co KG, 46519 Alpen (DE)
(72) Erfinder: Struik, Lauwrens, 3247CN Dirksland (NL); van Dueren den Hollander, Arjen, 3281 BK Numansdorp (NL)

(56) Entgegenhaltungen:
- DE-A1- 1 557 706
- FR-A1- 2 587 581
- GB-A- 2 338 635
- US-A- 5 392 863

## Beschreibung

Die vorliegende Erfindung betrifft ein landwirtschaftliches Arbeitsgerät, insbesondere zur Bearbeitung von Reihenkulturen, sowie eine Arbeitsgeräteanordnung und ein Verfahren zur Steuerung eines Arbeitsgerätes.

In der Landwirtschaft werden Feldpflanzen häufig in Reihen angebaut. Eine Bearbeitung des Bodens zwischen den Reihen, beispielsweise eine Hackbearbeitung zur Unkrautentfernung, oder eine Bearbeitung der Pflanzen, beispielsweise durch Besprühen, kann maschinell erfolgen. Hierfür wird üblicherweise ein entsprechendes Arbeitsgerät an einen Traktor angebaut oder angehängt und in Arbeitsrichtung entlang der Pflanzenreihen bewegt. Das Arbeitsgerät weist hierfür Bodenbearbeitungswerkzeuge auf, welche auf die Art der Bodenbearbeitung abgestimmt und entsprechend den Pflanzenreihen und deren Zwischenräume an einem Rahmen angeordnet sind. Eine Bearbeitung von Reihenkulturen an einem Hang stellt dabei eine besondere Herausforderung dar, da sowohl das Zugfahrzeug als auch das Arbeitsgerät mit den Bodenbearbeitungswerkzeugen entlang der Reihenkultur geführt werden müssen, da es sonst zu einer Beschädigung der Feldpflanzen kommen kann. Um dies zu ermöglichen sind unterschiedliche Lösungen bekannt. Eine automatische Führungsvorrichtung für ein von einem Traktor gezogenes landwirtschaftliches Arbeitsgerät ist aus der FR 2 587 581 A1 bekannt.

Ein gattungsgemäßes landwirtschaftliches Arbeitsgerät wird beispielsweise in der EP 3 766 319 A1 offenbart, wobei das Arbeitsgerät mehrere Arbeitswerkzeuge aufweist, die beim Bearbeiten des Bodens mit Hilfe eines Zugfahrzeuges linientreu zwischen Reihen von Feldpflanzen hindurchgeführt werden. Um einem Abdriften des Arbeitsgerätes bei Hangquerfahrten entgegenzuwirken, ist eine aktiv antreibbare Giereinrichtung zum Drehen der Arbeitswerkzeuge um eine Hochachse während des Hindurchführens zwischen den Reihen der Feldpflanzen vorgesehen, wobei unabhängig von der Art der Bewegung des Zugfahrzeuges die Arbeitswerkzeuge derart aktiv mit einer Gierbewegung beaufschlagbar sind, dass eine linientreue Bodenbearbeitung auch bei Hangquerfahrten und/oder Kurvenfahrten des Zugfahrzeuges durchführbar ist. Nachteilig ist hierbei jedoch der benötigte Bauraum für die Giereinrichtung in Arbeitsrichtung, da durch den Abstand zum einen eine Bewegung des Zugfahrzeuges an den Werkzeugen zu einer größeren seitlichen Bewegung führt und zum anderen wird der Schwerpunkt des Arbeitsgerätes dadurch weiter von dem Zugfahrzeug weg verlagert, wodurch dessen Vorderräder entlastet werden und es zu einer Beeinträchtigung des Lenkverhaltens, besonders bei einer Hangquerfahrt, kommen kann.

Es ist daher die Aufgabe der vorliegenden Erfindung eine Vorrichtung und ein Verfahren zur seitlichen Verlagerung eines Anbaugerätes anzugeben, welche die oben genannten Nachteile behebt.

Die Aufgabe wird gelöst durch ein Arbeitsgerät gemäß den Merkmalen des Anspruches 1, eine Arbeitsgeräteanordnung gemäß den Merkmalen des Anspruchs 9 und ein Verfahren gemäß den Merkmalen des Anspruches 10. Vorteilhafte Ausgestaltungen der Erfindung sind in den Unteransprüchen angegeben.

Ein landwirtschaftliches Arbeitsgerät, insbesondere zur Bearbeitung von Reihenkulturen, zur Anordnung an einer Anbauvorrichtung eines Zugfahrzeugs, weist Mehrzahl an Bodenbearbeitungswerkzeugen sowie mindestens einen Grundrahmen und mindestens ein an dem Grundrahmen lenkbar angeordnetes Bodeneingriffsmittel auf, welches zumindest bei einer Bodenbearbeitung im Bodeneingriff steht. Gemäß der Erfindung ist ein Neigungssensor zur Erfassung eines seitlichen Neigungswinkels des Arbeitsgerätes, insbesondere rechtwinkelig, zu einer Arbeitsrichtung vorgesehen, weiterhin ist ein Gerätesensor vorgesehen, welcher ausgebildet und ausgestaltet ist, in einem montierten Zustand des Arbeitsgerätes an dem Zugfahrzeug, einen seitlichen Versatz zwischen dem Arbeitsgerät, insbesondere dem Grundrahmen, und dem Zugfahrzeug zu bestimmen, und eine Steuereinheit ist vorgesehen, durch welche das mindestens eine Bodeneingriffsmittel basierend auf dem seitlichen Versatz des Arbeitsgerätes und dem ermittelten Neigungswinkel steuerbar ist.

Eine seitliche Neigung des angebauten Arbeitsgerätes, wie sie beispielsweise bei einer Hangquerfahrt auftreten kann, ist mittels des Neigungssensors bestimmbar. Die seitliche Neigung des Arbeitsgerätes kann sich dabei auf eine Waagerechte beziehen und rechtwinklig zu einer Arbeitsrichtung bestimmt werden. Eine durch den Neigungssensor bestimmte Neigung kann an die Steuereinheit übermittelt werden. Die Arbeitsrichtung kann dabei im Wesentlichen einer Längserstreckung der Reihenkultur entsprechen. Die Anbauvorrichtung des Zugfahrzeuges kann dem dran angebauten Arbeitsgerät, insbesondere dessen Grundrahmen, eine seitliche, im Wesentlichen gierfreie, Bewegung relativ zu dem Zugfahrzeug ermöglichen. Dieser seitliche Versatz kann durch einen Gerätesensor, welcher insbesondere arbeitsgeräteseitig angeordnet ist, bestimmt werden. Basierend auf der Neigung und dem seitlichen Versatz des Arbeitsgerätes kann die Steuereinheit, beispielsweise bei einer Hangquerfahrt, das seitlich versetzte Arbeitsgerät mittels der lenkbaren Bodeneingriffsmittel wieder im Wesentlichen mittig hinter das Zugfahrzeug und/oder relativ zu der Reihenkultur ausrichten, um eine verbesserte Bearbeitung des Bodens und/oder der Reihenkultur zu ermöglichen. Bodeneingriffsmittel können beispielsweise Räder, Sechscheiben, Spurräder sein, welche aktiv durch die Steuereinheit lenkbar ausgestaltet sind. Die Bodeneingriffsmittel können dabei unmittelbar unterhalb des Grundrahmens an diesem, insbesondere benachbart zu der Anbauvorrichtung, angeordnet sein, wodurch in Arbeitsrichtung nur ein geringer Bauraumbedarf benötigt würde.

Der geringe Bauraumbedarf in Arbeitsrichtung hat den Vorteil, dass zum einen eine Lenkbewegung des Zugfahrzeuges an den Bodenbearbeitungswerkzeugen zu geringeren seitlichen Bewegungen führt und zum anderen der Schwerpunkt des Arbeitsgerätes dichter am Zugfahrzeug liegt, was zu einer verringerten Beeinträchtigung des Lenkverhaltens des Zugfahrzeuges führt, besonders bei einer Hangquerfahrt. Dieser Effekt wird noch dadurch verstärkt, dass die Bodeneingriffsmittel benachbart zu der Anbauvorrichtung an dem Grundrahmen angeordnet sind und einen Teil des Gewichtes des Anbaugerätes tragen können. Durch die aktive Lenkung kann bei einer Hangquerfahrt auch ein Teil der hangabwärtswirkenden Gewichtskraft des Arbeitsgerätes aufgenommen werden, wodurch das Zugfahrzeug geringere Lenkausschläge benötigt und die Lenkung verbessert werden kann.

Vorzugsweise ist der Gerätesensor derart ausgebildet und ausgestaltet, dass ein seitlicher Versatz durch Bestimmung eines Gerätewinkels relativ zu der Anbauvorrichtung und/oder dem Zugfahrzeug bestimmbar ist. Der Gerätewinkel kann dabei ein im Wesentlichen horizontaler Winkel zwischen einem Punkt auf dem Arbeitsgerät, insbesondere dem Grundrahmen, und einem Punkt der Anbauvorrichtung sein.

In einer bevorzugten Ausgestaltung der Erfindung ist die Anbauvorrichtung in Form eines Dreipunktkrafthebers mit einem Oberlenker und zwei Unterlenkern ausgebildet, wobei der, insbesondere im Wesentlichen horizontale, Gerätewinkel zwischen dem Oberlenker und dem Arbeitsgerät bestimmbar ist. Für einen seitlichen Versatz des Arbeitsgerätes können die Unterlenker der Anbauvorrichtung lose sein, also sich in horizontaler Richtung im Wesentlichen frei bewegen, soweit der Bauraum des Zugfahrzeuges oder eine Begrenzung dies zulassen. Bei einer seitlichen Verlagerung des Arbeitsgerätes wird der Oberlenker ebenfalls seitlich ausgelenkt. Diese seitliche Auslenkung des Oberlenkers kann der Gerätesensor als im Wesentlichen horizontalen Gerätewinkel zwischen dem Oberlenker und dem Arbeitsgerät erfassen. Dies ermöglicht eine Anordnung des Gerätesensors an einer Stelle, welche nur geringer Verschmutzung ausgesetzt ist und somit eine zuverlässige Ermittlung des Versatzes ermöglicht.

**In** einer besonders bevorzugten Ausgestaltung der Erfindung ist der Gerätesensor arbeitsgeräteseitig an einer Lagerstelle des Oberlenkers angeordnet und derart ausgebildet und ausgestaltet, dass mechanisch und/oder berührungslos der Gerätewinkel des Oberlenkers relativ zu dem Arbeitsgerät bestimmbar ist. Der Grundrahmen kann eine Lagerstelle zur Aufnahme des Oberlenkers aufweisen. Zur mechanischen Bestimmung des Gerätewinkels kann an der Lagerstelle beispielsweise ein Winkelsensor angeordnet sein, welcher mechanisch mit dem Oberlenker verbunden sein kann, um dessen Bewegung zumindest in horizontaler Richtung zu erfassen und den Gerätewinkel zu bestimmen. Eine berührungslose Bestimmung des Gerätewinkels kann beispielsweise durch einen optischen oder elektromagnetischen Sensor erfolgen, welcher zumindest eine horizontale Bewegung des Oberlenkers erfassen kann. Der durch den Gerätesensor bestimmte Gerätewinkel kann im Wesentlichen der horizontale Winkel zwischen dem Oberlenker und dem Arbeitsgerät sein.

In einer weiteren Ausgestaltung der Erfindung ist an dem Grundrahmen ein werkzeugtragender Trägerrahmen angeordnet, welcher, insbesondere parallel, relativ zu dem Grundrahmen seitlich verlagerbar ausgestaltet ist. Der Trägerrahmen kann seitlich, insbesondere im Wesentlichen rechtwinkelig zur Arbeitsrichtung, verschwenkbar an dem Grundrahmen angeordnet sein, beispielsweise durch einen parallelogrammartigen Schwenkmechanismus. Ein Verschwenken des Trägerrahmens kann dabei basierend auf einem, insbesondere optischen, Reihensensor erfolgen, welcher mit der Steuereinheit in Verbindung stehen kann und die ein Verschwenken des Trägerrahmens steuern kann. Ein Verschwenken des Trägerrahmens kann dabei in Kombination mit einem Verschwenken bzw. Lenken des Grundrahmens durch die Steuereinheit erfolgen. Hierdurch kann eine optimale Ausrichtung der an dem Trägerahmen angeordneten Bodenbearbeitungswerkzeuge relativ zu der Reihenkultur und/oder den Zwischenräumen ermöglicht werden.

Vorzugsweise ist mindestens ein Lenkwinkelsensor zur Bestimmung des Lenkwinkels des mindestens einen Bodeneingriffsmittels vorgesehen. Ein Lenkwinkelsensor kann dabei arbeitsgeräteseitig, insbesondere grundrahmenseitig, an oder benachbart zu dem Bodeneingriffsmittel angeordnet sein. Der Lenkwinkelsensor kann mit der Steuereinheit in Verbindung stehen und erfasste Lenkwinkel übermitteln. Ein maximaler Lenkwinkel eines Bodeneingriffsmittels, welcher einer Endlage des Bodeneingriffsmittels in der jeweiligen Lenkrichtung entspricht, kann durch den Lenkwinkelsensor erfasst und die Steuereinheit übermittelt werden. Die Bodeneingriffsmittel können unterschiedliche oder gleiche Lenkwinkel aufweisen. Hierdurch kann die Steuereinheit, insbesondere in Kombination mit einer Verlagerung des Trägerrahmens, eine optimale Positionierung des Arbeitsgerätes relativ zu der Reihenkultur und dem Zugfahrzeug einstellen.

Besonders bevorzugt ist die Steuereinheit derart ausgestaltet und eingerichtet, mindestens einen Lenkwinkel und/oder in einem montierten Zustand des Arbeitsgerätes einen Steuerwinkel des Zugfahrzeugs zu empfangen und auszuwerten. Neben einem Lenkwinkel eines Bodeneingriffsmittels kann die Steuereinrichtung, in einem montierten Zustand des Arbeitsgerätes, mindestens einen Steuerwinkel eines lenkbaren Bodeneingriffsmittels des Zugfahrzeuges empfangen und auswerten. Hierdurch kann die Steuereinheit einen Steuerwinkel des Zugfahrzeuges als Referenzwert für einen zu bestimmenden Lenkwinkel eines Bodeneingriffsmittels des Arbeitsgerätes nutzen. Dies hat den Vorteil, dass eine Bestimmung des Lenkwinkels für das Arbeitsgerät beschleunigt werden kann oder bei einem Ausfall eines Sensors als Rückfalllösung zur Bestimmung des zu steuernden Lenkwinkels dienen kann.

**In** einer weiteren bevorzugten Ausgestaltung der Erfindung ist mindestens ein Aktuator zum Lenken des mindestens einen Bodeneingriffsmittels vorgesehen. Der mindestens eine Aktuator ist mit der Steuereinheit verbunden und zur Lenkung eines oder mehrerer Bodeneingriffsmittel an dem Grundrahmen angeordnet. Durch einen Aktuator an jedem Bodeneingriffsmittel kann eine individuelle Steuerung der Bodeneingriffsmittel, beispielsweise bei unterschiedlichem Boden und Schlupf, erfolgen und so eine Führung des Arbeitsgerätes verbessert werden.

Weiterhin betrifft die Erfindung eine Arbeitsgeräteanordnung umfassend ein Zugfahrzeug mit einer Anbauvorrichtung, insbesondere in Form eines Dreipunktkrafthebers mit zwei Unterlenkern und einem Oberlenker, und mindestens einem an der Anbauvorrichtung angeordneten Arbeitsgerät nach einem der vorhergehenden Ansprüche.

Die Erfindung betrifft weiterhin ein Verfahren zur Seitenführung eines wie vorstehend ausgebildeten und ausgestaltetem Arbeitsgerätes oder einer Arbeitsgeräteanordnung und umfasst die Schritte:
- Bestimmung eines Neigungswinkels des Arbeitsgeräts, insbesondere rechtwinklig zu einer Arbeitsrichtung des Arbeitsgerätes,
- Bestimmung eines seitlichen Versatzes des an einem Zugfahrzeug montierten Arbeitsgerätes relativ zu dem Zugfahrzeug,
- Steuerung mindestens eines Bodeneingriffsmittels in Abhängigkeit des Neigungswinkels und des seitlichen Versatzes derart, dass der seitliche Versatz verringert wird.

Eine seitliche Neigung des angebauten Arbeitsgerätes, wie sie beispielsweise bei einer Hangquerfahrt auftreten kann, ist mittels des Neigungssensors bestimmbar. Die seitliche Neigung des Arbeitsgerätes kann auf die Waagerechte bezogen sein, wodurch die ermittelte seitliche Neigung im Wesentlichen einer Hangneigung entsprechen kann. Mit der Ermittlung des Neigungswinkels kann eine auf die Gerätelängsrichtung bezogene linksseitige oder rechtsseitige Neigung des Arbeitsgerätes ermittelt werden und basierend auf der ermittelten Neigung, beispielsweise durch die Steuereinheit, eine Richtung der Lenkung des Bodeneingriffsmittels, beispielweise hangaufwärts, bestimmt werden.

Eine durch den Neigungssensor bestimmte Neigung kann an die Steuereinheit übermittelt werden. Ein seitlicher Versatz des Arbeitsgerätes relativ zu der Anbauvorrichtung bzw. dem Zugfahrzeug kann durch einen Gerätesensor, welcher insbesondere arbeitsgeräteseitig angeordnet ist, bestimmt werden. Basierend auf der Neigung und dem seitlichen Versatz des Arbeitsgerätes kann die Steuereinheit, beispielsweise bei einer Hangquerfahrt, das seitlich versetzte Arbeitsgerät mittels der lenkbaren Bodeneingriffsmittel wieder im Wesentlichen mittig hinter das Zugfahrzeug und/oder relativ zu der Reihenkultur ausrichten und so den Gerätewinkel verringern, um eine verbesserte Bearbeitung des Bodens und/oder der Reihenkultur zu ermöglichen. Ein Verringern des seitlichen Versatzes kann solange erfolgen, bis der Gerätewinkel ein vorher definierter Schwellwert unterschreitet, der Gerätewinkel auf null sinkt und/oder ein durch die Steuereinheit vorbestimmter seitlicher Versatz in die entgegengesetzte Richtung, beispielsweise hangaufwärts, erreicht ist. Denkbar

In einer weiterhin bevorzugten Ausgestaltung des Verfahrens erfolgt eine Lenkung des mindestens einen Bodeneingriffsmittels erst beim Überschreiten eines vorher definierten Schwellwert des Neigungswinkels. Hierdurch kann eine zu häufige und unruhige Steuerung vermieden werden. Der Schwellwert kann so bestimmt werden, dass beispielsweise bewegliche Bodenbearbeitungswerkzeuge bis zu dem Schwellwert noch eine seitliche Bewegung ausgleichen können.

Vorzugsweise wird bei einem an einem Zugfahrzeug montierten Arbeitsgerät der seitliche Versatz in Form eines Gerätewinkels zwischen einem Oberlenker eines Dreipunktkrafthebers eines Zugfahrzeuges und dem Arbeitsgerät bestimmt. Der Gerätewinkel kann so zwischen einer Gerätelängsrichtung und der Arbeitsrichtung und/oder einer Zugfahrzeuglängsrichtung an einer störungsunanfällige Stelle gemessen werden.

Vorzugsweise wird ein Lenkwinkel und/oder eine Endlage des lenkbaren Bodeneingriffsmittels, insbesondere über einen Lenkwinkelsensor, bestimmt.

In einer weiter bevorzugten Ausgestaltung des Verfahrens wird ein Lenkwinkel zur seitlichen Verlagerung des Arbeitsgerätes, insbesondere des Grundrahmens, voreingestellt, welcher auf einem Steuerwinkel des Zugfahrzeuges basiert. Neben einem Lenkwinkel eines Bodeneingriffsmittels kann die Steuereinrichtung, in einem montierten Zustand des Arbeitsgerätes, mindestens einen Steuerwinkel eines lenkbaren Bodeneingriffsmittels des Zugfahrzeuges empfangen und auswerten. Hierdurch kann die Steuereinheit einen Steuerwinkel des Zugfahrzeuges als Referenzwert für einen zu bestimmenden Lenkwinkel eines Bodeneingriffsmittels des Arbeitsgerätes nutzen. Dies hat den Vorteil, dass eine Bestimmung des Lenkwinkels für das Arbeitsgerät beschleunigt werden kann oder bei einem Ausfall eines Sensors als Rückfalllösung zur Bestimmung des zu steuernden Lenkwinkels dienen kann.

Besonders bevorzugt wird ein werkzeugtragender Trägerrahmen zur Ausrichtung an einer Reihenkultur relativ zu dem Grundrahmen seitlich verlagert, insbesondere basierend auf einem Reihensensor. Der Reihensensor kann ein optischer Sensor sein, dessen Signale von der Steuereinheit empfangen und ausgewertet werden können. Durch die Steuereinheit kann der Trägerrahmen entlang der Reihenkultur und/oder deren Zwischenräumen geführt werden. Denkbar ist auch, dass die Steuereinheit ein seitliches Verlagern bzw. Lenken des Grundrahmens basierend auf dem Reihensensor steuern kann. Hierbei könnte beispielsweise eine grobe Ausrichtung der Bodenbearbeitungswerkzeuge über ein seitliches Verlagern des Grundrahmens und eine feinere Ausrichtung über ein seitliches Verlagern des Trägerrahmens erfolgen, um die Bearbeitungsqualität des Arbeitsgerätes zu erhöhen und zu vermeiden, dass der Grundrahmen und/oder der Trägerrahmen eine zu große seitliche Verlagerung erfahren.

Weitere Einzelheiten der Erfindung sind den Figuren und der Figurenbeschreibung zu entnehmen, die eine bevorzugte Ausführung der Erfindung zeigen.

Es zeigen:
- Fig 1:: ein seitlich verlagertes Arbeitsgerät zur Bearbeitung von Reihenkulturen in einem montierten Zustand an einem Zugfahrzeug;
- Fig. 2:: das Arbeitsgerät aus Fig. 1 mittig hinter dem Zugfahrzeug;
- Fig. 3:: eine Detailansicht eines Gerätewinkelsensors des Arbeitsgerätes; und
- Fig. 4:: ein Ablaufdiagramm eines Verfahrens zur Steuerung eines Arbeitsgerätes.

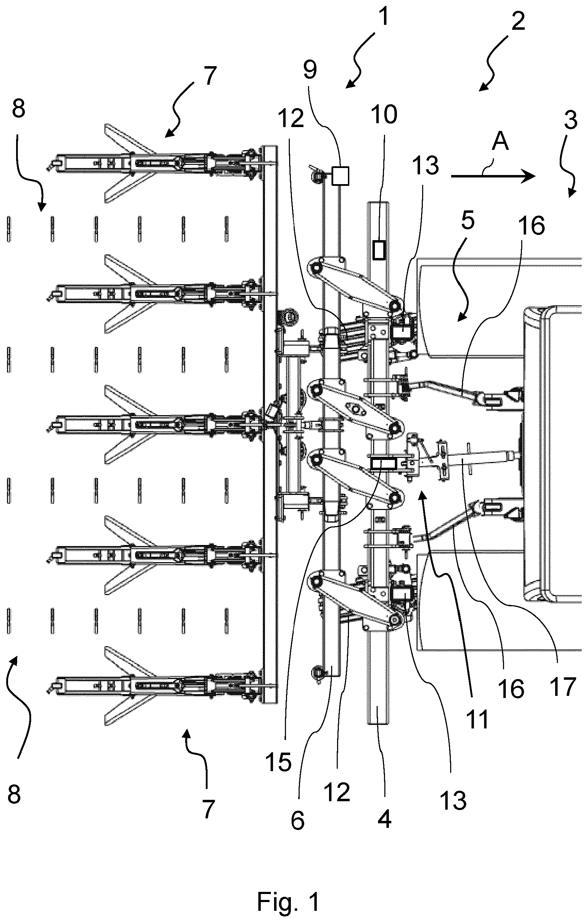

In Figur 1 ist ein landwirtschaftliches Arbeitsgerät 1 dargestellt, welches zur Bearbeitung von Reihenkulturen ausgestaltet ist. Das Arbeitsgerät 1 ist heckseitig an einem Zugfahrzeug 3 angeordnet und bildet mit diesem zusammen eine Arbeitsgeräteanordnung 2. Zur Aufnahme des Arbeitsgerätes 1 weist das Zugfahrzeug 3 heckseitig eine Anbauvorrichtung 5 in Form eines Dreipunktkrafthebers mit einem Oberlenker 17 und zwei Unterlenkern 16 auf. Die Unterlenker 16 und der Oberlenker 17 sind dabei mit einem Grundrahmen 4 des Arbeitsgerätes 1 lösbar verbunden. Zumindest die Unterlenker 16 der Anbauvorrichtung 5 sind in seitlicher Richtung nicht festgelegt und ermöglichen so ein seitliches Verschwenken des Arbeitsgerätes 1, zumindest innerhalb des verfügbaren Bauraumes oder einer zu beiden Seiten definierten Endlage der Unterlenker 16. An dem Grundrahmen 4 ist an einer dem Zugfahrzeug 3 abgewandten Seite ein Trägerrahmen 6 angeordnet, an dem eine Mehrzahl an Bodenbearbeitungswerkzeugen 7 angeordnet sind. Bodenbearbeitungswerkzeuge 7 können dabei Hackwerkzeuge, Scharwerkzeuge oder auch Sprühwerkzeuge sein. Die dargestellten Bodenbearbeitungswerkzeuge 7 dienen der Bodenbearbeitung eines Zwischenraumes zwischen den Pflanzen der Reihenkultur 8, beispielsweise einer Hackbearbeitung zur Entfernung von Unkraut.

Der Trägerrahmen 6 ist mittels einer parallelogrammartigen Lagerung parallel zu dem Grundrahmen 4 verschwenkbar an diesem angeordnet. Der Trägerrahmen 6 kann aktiv in seitlicher Richtung relativ zu dem Grundrahmen 4 verschwenkt werden, wodurch eine präzisere Führung der Bodenbearbeitungswerkzeuge 7 relativ zu der Reihenkultur 8, hier in den Zwischenräumen, ermöglicht wird. Zur Führung und Steuerung des Arbeitsgerätes 1 ist eine Steuereinheit 15 vorgesehen, welche unter anderem mit einem Reihensensor 9 zur Erfassung der Reihenkultur 8 verbunden ist. Die dargestellte Steuereinheit 15 ist an dem Grundrahmen 4 des Arbeitsgerätes 1 angeordnet, wohingegen der Reihensensor 9 endseitig an dem Trägerrahmen 6 angeordnet ist. Die Steuereinheit 15 und/oder der Reihensensor 9 können auch an einer anderen, geeigneten Stelle des Arbeitsgerätes 1 angeordnet sein.

Das in Figur 1 dargestellte Arbeitsgerät 1 ist an der Anbauvorrichtung 5 des Zugfahrzeuges 3 befestigt, und in Arbeitsrichtung A gesehen aus einer Mitte des Zugfahrzeuges 3 nach rechts verschwenkt, wodurch ein seitlicher Versatz des Arbeitsgerätes 1 und insbesondere des Grundrahmens 4 gegenüber dem Zugfahrzeug 3 entsteht. Dieser seitliche Versatz wird durch lose Unterlenker 16 ermöglicht. Der seitliche Versatz kann beispielsweise bei einer Hangquerfahrt auftreten, wenn das Arbeitsgerät 1 zum Beispiel durch seine Gewichtskraft hangabwärts gezogen wird. Um die Bodenbearbeitungswerkzeuge 7 weiterhin optimal zwischen der Reihenkultur 8 zu führen, ist der Trägerrahmen 6 durch die Steuereinheit 15 in entgegengesetzte Richtung, hier in Arbeitsrichtung A gesehen nach links, beispielsweise hangaufwärts, verschwenkt. Die Möglichkeit des Ausgleichens durch das Verschwenken des Trägerrahmens 6 ist jedoch baulich begrenzt und würde bei einem zunehmenden seitlichen Versatz des Arbeitsgerätes 1, beispielsweise durch eine zunehmende Drehung des Zugfahrzeuges 3 beim Ausgleichen einer Hangabdrift, zu Schäden an der Reihenkultur 8 führen.

Um eine verbesserte Steuerung des Anbaugerätes 1 zu ermöglichen, sind daher ein Neigungssensor 10 und ein Gerätesensor 11 vorgesehen, welche mit der Steuereinheit 15 verbunden sind. Der Neigungssensor 10 dient der Erfassung eines seitlichen Neigungswinkels des Arbeitsgerätes 1, insbesondere rechtwinkelig, zu einer Arbeitsrichtung A. Dieser Neigungswinkel ist auf eine Waagerechte bezogen und kann im Wesentlichen einer Hangneigung entsprechen. Der Neigungssensor 10 ist an dem Grundrahmen 4 angeordnet, denkbar ist jedoch auch, dass der Neigungswinkel von anderer Sensorik, beispielsweise des Zugfahrzeuges 3, an die Steuereinheit 15 übermittelt werden kann. Der Gerätesensor ist ebenfalls an dem Grundrahmen 4 angeordnet und dient der Erfassung des seitlichen Versatzes zwischen dem Arbeitsgerät 1, insbesondere dem Grundrahmen 4, und dem Zugfahrzeug 3. Um eine aktive Verlagerung des Arbeitsgerätes 1 gegenüber dem Zugfahrzeug 3 zu ermöglichen, weist das Arbeitsgerät 1 zwei Bodeneingriffsmittel 12 in Form von lenkbaren Rädern auf, welche an dem Grundrahmen 4 durch Aktuatoren 14 lenkbar und steuerbar angeordnet sind. An den Bodeneingriffsmitteln 12 ist jeweils ein Lenkwinkelsensor 13 zur Bestimmung des jeweiligen Lenkwinkels vorgesehen.

Basierend auf dem seitlichen Versatz des Arbeitsgerätes 1 und dem ermittelten Neigungswinkel steuert die Steuereinheit 15 mindestens ein Bodeneingriffsmittel 12 an, um den seitlichen Versatz zumindest zu reduzieren. Für das dargestellte Arbeitsgerät 1 würde dies eine in Arbeitsrichtung A gesehen nach links, beispielsweise hangaufwärts, gerichtete Lenkbewegung der Bodeneingriffsmittel 12 bedeuten, wodurch der Grundrahmen 4 und damit das Arbeitsgerät 1 wieder ein eine in etwas mittige Position hinter dem Zugfahrzeug 3 verbracht würde.

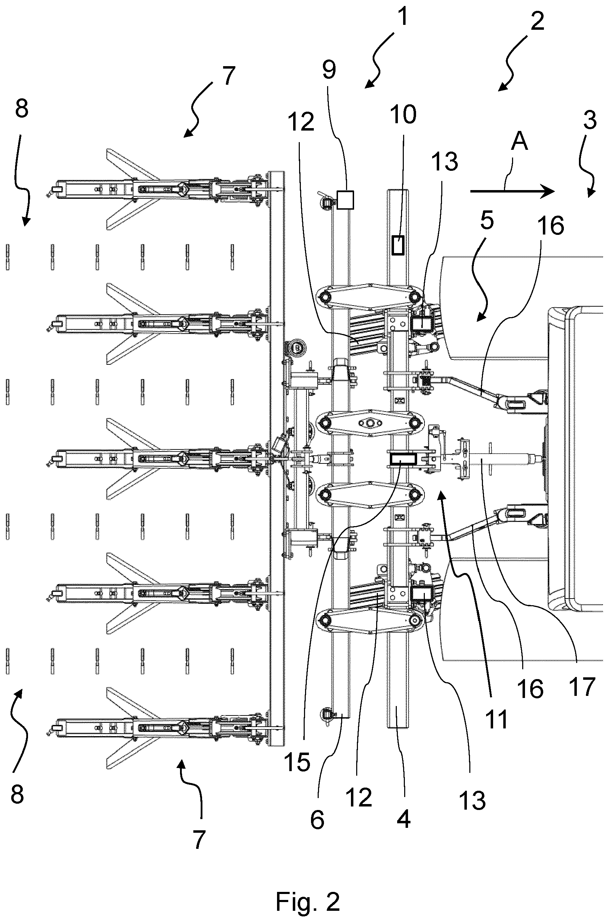

In Fig. 2 ist das Arbeitsgerät 1 nach einem Steuereingriff des Steuergerätes 15 und der entsprechenden Lenkung der Bodeneingriffsmittel 12 dargestellt. Der Grundrahmen 4 ist im Wesentlichen mittig hinter dem Zugfahrzeug 3 angeordnet und der Trägerrahmen 6 in eine in etwas mittige Position hinter den Grundrahmen 4 zurückgeschwenkt. Die Bodenbearbeitungswerkzeuge 7 sind weiterhin zwischen den Pflanzenreihen der Reihenkultur 8 geführt, wobei durch die Verlagerung des Grundrahmens 4 der Trägerrahmen 6 wieder zu beiden Seiten in etwas gleich weit Verschwenken kann, um die Bodenbearbeitungswerkzeuge 7 optimal entlang der Reihenkultur 8 führen zu können.

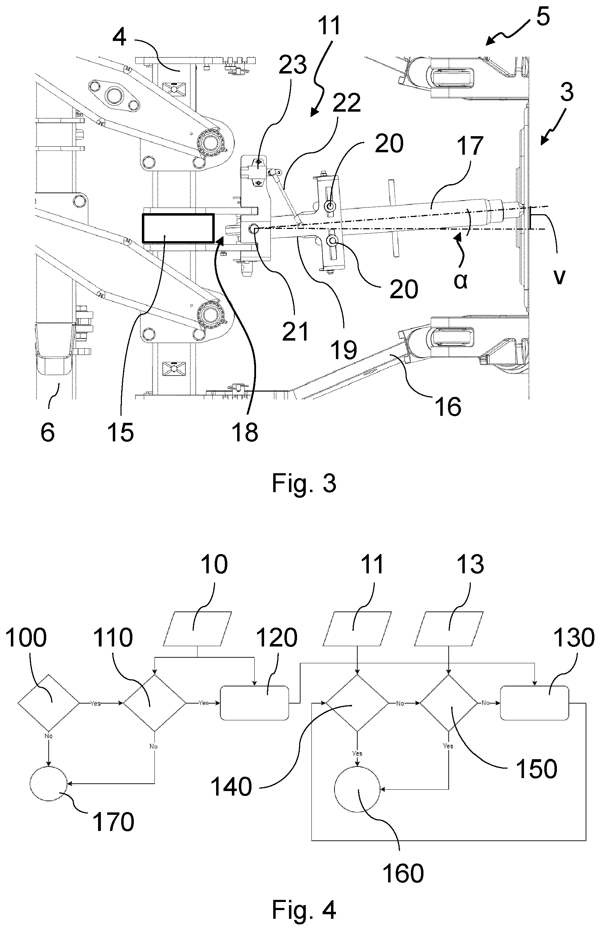

Der Gerätesensor 11 ist in Fig. 3 vergrößert dargestellt. Der Oberlenker 17 der Anbauvorrichtung 4 des Zugfahrzeuges 3 ist grundrahmenseitig an einer Lagerstelle 18 beweglich gelagert. Bei einer seitlichen Verlagerung des Arbeitsgerätes 1 und damit des Grundrahmens 4 erfolgt eine Drehbewegung des Oberlenker 17 um den Drehpunkt 21 um einen Winkel, den Gerätewinkel α. Um den Gerätewinkel α zu erfassen, weist der Gerätesensor 11 ein Winkelblech 19 auf, welches sich von der Lagerstelle 18 zumindest teilweise entlang des Oberlenkers 17 erstreckt, und mit diesem um den Drehpunkt 21 drehbar gelagert ist. An dem Winkelblech 19 sind zwei Kontaktbolzen 20 derart angeordnet, dass diese an je einer Seite des Oberlenker 17 angeordnet sind und diesen kontaktieren. Dadurch wird eine Bewegung des Oberlenkers 17 über die Kontaktbolzen 20 auf das Winkelblech 19 übertragen, welches sich folglich zusammen mit dem Oberlenker 17 um den Drehpunkt 21 drehen kann. Diese Drehbewegung des Oberlenkers 17 wird in horizontaler Richtung über einen Winkelsensor 23 erfasst und so der Gerätewinkel α bestimmt. Der Winkelsensor 23 ist über eine Stange 22 mit dem Winkelblech 19 verbunden, so dass eine horizontale Drehbewegung des Winkelbleches 19 und damit des Oberlenkers 17 erfasst werden kann. Aus dem Gerätewinkel α kann die Steuereinheit 15 den seitlichen Versatz v ermitteln.

In Fig. 4 ist ein Ablaufdiagramm für ein Verfahren zur Steuerung, insbesondere zur Seitenführung, eines Arbeitsgerätes 1 bzw. der Arbeitsgeräteanordnung 2 dargestellt. Nach einer Aktivierung der Steuerung 100 wird in einem ersten Schritt 110 vor einer Lenkung mindestens eines Bodeneingriffsmittels 12 zunächst geprüft, ob ein vorher definierter Schwellwert des Neigungswinkels überschritten wurde oder nicht. Hierfür wird der aktuelle Neigungswinkel durch den Neigungssensor 10 ermittelt und mit einem hinterlegten Schwellwert verglichen. Ist der Schwellwert nicht überschritten, erfolgt keine Steuerung 180, bis bei erneuter Abfrage eine Überschreitung festgestellt wird. Ist eine Überschreitung des Schwellwert jedoch gegeben, wird in einem nächsten Schritt 120 anhand des ermittelten Neigungswinkels eine Richtung der Neigung und/oder Hangneigung bestimmt, wobei ein seitlicher Versatz des Arbeitsgerätes 1 gegenüber dem Zugfahrzeug 3 angenommen wird.

Die ermittelte Richtung der Neigung dient in einem nächsten Schritt 130 bei der Lenkung der Bodeneingriffsmittel 12 mittels der Aktuatoren 14 als Grundlage für die Richtung der Lenkung. Hierbei erfolgt eine Lenkung der Bodeneingriffsmittel 12 derart, dass entgegen der Neigung gelenkt wird, also beispielsweise hangaufwärts. Dabei wird in einem Schritt 140 mittels des Gerätesensors 11 der Gerätewinkel α bestimmt und der seitliche Versatz v ermittelt und überprüft, ob das Arbeitsgerät im Wesentlichen mittig hinter dem Zugfahrzeug 3 angeordnet ist, was bei einem Gerätewinkel α gleich null und keinem seitlichen Versatz v der Fall wäre. Wenn der seitliche Versatz v null ist, erfolgt keine weitere Steuerung 160 der Bodeneingriffsmittel 12. Die Bodeneingriffsmittel 12 verbleiben in dem zuletzt gesteuerten Lenkwinkel, wodurch das Arbeitsgerät 1 im Wesentlichen mittig hinter dem Zugfahrzeug 3 gehalten wird.

Falls der in Schritt 140 ermittelte seitliche Versatz v ungleich null ist, erfolgt in einem nächsten Schritt 150 eine Abfrage der Lenkwinkel der Bodeneingriffsmittel 12 und der Abgleich, ob diese in einer Endlage sind, also nicht weiter ausgelenkt werden können. Falls eine Endlage erreicht ist, erfolgt ebenfalls keine weitere Steuerung 160 der Bodeneingriffsmittel 12. Falls in Schritt 150 keine Endlage der Bodeneingriffsmittel 12 ermittelt wird, erfolgt über Schritt 130 eine weitere Lenkung der Bodeneingriffsmittel 12 in Abhängigkeit des Neigungswinkels und des seitlichen Versatzes v, bis die Bedingungen in Schritt 140 oder 150 erreicht sind.

**Bezugszeichen**

| | | | |
|---|---|---|---|
| 1 | Arbeitsgerät | 100 | Start |
| 2 | Arbeitsgeräteanordnung | 110 | Abgleich Neigungswinkel |
| 3 | Zugfahrzeug | 120 | Bestimmung Lenkrichtung |
| 4 | Grundrahmen | 130 | Steuerung Bodeneingriffsmittel |
| 5 | Anbauvorrichtung | 140 | Abgleich Gerätewinkel |
| 6 | Trägerrahmen | 150 | Abgleich Lenkwinkel |
| 7 | Bodenbearbeitungswerkzeug | 160 | Steuerung inaktiv |
| 8 | Reihenkultur | 170 | Steuerung inaktiv |
| 9 | Reihensensor | | |
| 10 | Neigungssensor | A | Arbeitsrichtung |
| 11 | Gerätesensor | α | Gerätewinkel |
| 12 | Bodeneingriffsmittel | v | seitlicher Versatz |
| 13 | Lenkwinkelsensor | | |
| 14 | Aktuator | | |
| 15 | Steuereinheit | | |
| 16 | Unterlenker | | |
| 17 | Oberlenker | | |
| 18 | Lagerung | | |
| 19 | Winkelblech | | |
| 20 | Kontaktstift | | |
| 21 | Drehpunkt | | |
| 22 | Stange | | |
| 23 | Winkelsensor | | |

## Patentansprüche

1. Landwirtschaftliches Arbeitsgerät, insbesondere zur Bearbeitung von Reihenkulturen (8), zur Anordnung an einer Anbauvorrichtung (5) eines Zugfahrzeugs (3), wobei das Arbeitsgerät (1) eine Mehrzahl an Bodenbearbeitungswerkzeugen (7) sowie mindestens einen Grundrahmen (4) und mindestens ein an dem Grundrahmen (4) lenkbar angeordnetes Bodeneingriffsmittel (12) aufweist, welches bei einer Bodenbearbeitung im Bodeneingriff steht, **dadurch gekennzeichnet, dass** ein Neigungssensor (10) zur Erfassung eines seitlichen Neigungswinkels des Arbeitsgerätes (1), insbesondere rechtwinkelig, zu einer Arbeitsrichtung (A) vorgesehen ist, dass ein Gerätesensor (11) vorgesehen ist, welcher ausgebildet und ausgestaltet ist, in einem montierten Zustand des Arbeitsgerätes (1) an dem Zugfahrzeug (3), einen seitlichen Versatz (v) zwischen dem Arbeitsgerät (1), insbesondere dem Grundrahmen (4), und dem Zugfahrzeug (3) zu bestimmen, und dass eine Steuereinheit (15) vorgesehen ist, durch welche das mindestens eine Bodeneingriffsmittel (12) basierend auf dem seitlichen Versatz (v) des Arbeitsgerätes (1) und dem ermittelten Neigungswinkel steuerbar ist.

2. Arbeitsgerät nach Anspruch 1, **dadurch gekennzeichnet, dass** der Gerätesensor (11) derart ausgebildet und ausgestaltet ist, dass ein seitlicher Versatz (v) durch Bestimmung eines Gerätewinkels (α) relativ zu der Anbauvorrichtung (5) und/oder dem Zugfahrzeug (3) bestimmbar ist.

3. Arbeitsgerät nach Anspruch 1 oder 2, **dadurch gekennzeichnet, dass** die Anbauvorrichtung (5) in Form eines Dreipunktkrafthebers mit einem Oberlenker (17) und zwei Unterlenkern (16) ausgebildet ist, wobei der, insbesondere im Wesentlichen horizontale, Gerätewinkel (α) zwischen dem Oberlenker (17) und dem Arbeitsgerät (1) bestimmbar ist.

4. Arbeitsgerät nach einem der vorhergehenden Ansprüche, **dadurch gekennzeichnet, dass** der Gerätesensor (11) arbeitsgeräteseitig an einer Lagerstelle (18) des Oberlenkers (17) angeordnet ist und derart ausgebildet und ausgestaltet ist, dass mechanisch und/oder berührungslos der Gerätewinkel (α) des Oberlenkers (17) relativ zu dem Arbeitsgerät (1) bestimmbar ist.

5. Arbeitsgerät nach einem der vorhergehenden Ansprüche, **dadurch gekennzeichnet, dass** an dem Grundrahmen (4) ein werkzeugtragender Trägerrahmen (6) angeordnet ist, welcher, insbesondere parallel, relativ zu dem Grundrahmen (4) seitlich verlagerbar ausgestaltet ist.

6. Arbeitsgerät nach einem der vorhergehenden Ansprüche, **dadurch gekennzeichnet, dass** mindestens ein Lenkwinkelsensor (13) zur Bestimmung des Lenkwinkels des mindestens einen Bodeneingriffsmittels (12) vorgesehen ist.

7. Arbeitsgerät nach einem der vorhergehenden Ansprüche, **dadurch gekennzeichnet, dass** die Steuereinheit (15) derart ausgestaltet und eingerichtet ist, mindestens einen Lenkwinkel und/oder in einem montierten Zustand des Arbeitsgerätes (1) einen Steuerwinkel des Zugfahrzeugs (3) zu empfangen und auszuwerten.

8. Arbeitsgerät nach einem der vorhergehenden Ansprüche, **dadurch gekennzeichnet, dass** mindestens ein Aktuator zum Lenken des mindestens einen Bodeneingriffsmittels (12) vorgesehen ist

9. Arbeitsgeräteanordnung umfassend ein Zugfahrzeug (3) mit einer Anbauvorrichtung (5), insbesondere in Form eines Dreipunktkrafthebers mit zwei Unterlenkern (16) und einem Oberlenker (17), und mindestens einem an der Anbauvorrichtung (5) angeordneten Arbeitsgerät (1) nach einem der vorhergehenden Ansprüche.

10. Verfahren zur Seitenführung eines Arbeitsgerätes (1) oder einer Arbeitsgeräteanordnung (2) nach einem der Ansprüche 1 bis 9, umfassend die Schritte:
- Bestimmung eines Neigungswinkels des Arbeitsgeräts (1), insbesondere rechtwinklig, zu einer Arbeitsrichtung (A) des Arbeitsgerätes (1),
- Bestimmung eines seitlichen Versatzes (v) des an einem Zugfahrzeug (3) montierten Arbeitsgerätes (1) relativ zu dem Zugfahrzeug (3),
- Steuerung mindestens eines Bodeneingriffsmittels (12) in Abhängigkeit des Neigungswinkels und des seitlichen Versatzes (v) derart, dass der seitliche Versatz (v) verringert wird.

11. Verfahren nach Anspruch 10, **dadurch gekennzeichnet, dass** eine Lenkung des mindestens einen Bodeneingriffsmittels (12) erst beim Überschreiten eines vorher definierten Schwellwert des Neigungswinkels erfolgt.

12. Verfahren nach einem der Ansprüche 10 bis 11, **dadurch gekennzeichnet, dass** bei einem an einem Zugfahrzeug (3) montierten Arbeitsgerät (1) der seitliche Versatz (v) in Form eines Gerätewinkels (α) zwischen einem Oberlenker (17) eines Dreipunktkrafthebers eines Zugfahrzeuges (3) und dem Arbeitsgerät (1) bestimmt wird.

13. Verfahren nach einem der Ansprüche 10 bis 12, **dadurch gekennzeichnet, dass** ein Lenkwinkel und/oder eine Endlage des lenkbaren Bodeneingriffsmittels (12), insbesondere über einen Lenkwinkelsensor (13), bestimmt wird.

14. Verfahren nach einem der Ansprüche 10 bis 13, **dadurch gekennzeichnet, dass** ein Lenkwinkel zur seitlichen Verlagerung des Arbeitsgerätes (1), insbesondere des Grundrahmens (4), voreingestellt wird, welcher auf einem Steuerwinkel des Zugfahrzeuges (3) basiert.

15. Verfahren nach einem der Ansprüche 10 bis 14, **dadurch gekennzeichnet, dass** ein werkzeugtragender Trägerrahmen (6) zur Ausrichtung an einer Reihenkultur (8) relativ zu dem Grundrahmen (4) seitlich verlagert wird, insbesondere basierend auf einem Reihensensor (9).

## Claims

1. An agricultural implement, in particular for cultivating row cultures (8) for arrangement on an attachment device (5) of a traction vehicle (3), wherein the implement (1) comprises a plurality of soil cultivation tools (7) as well as at least one main frame (4) and at least one ground engagement means (12) steerably arranged on the main frame (4), which during soil cultivation is in ground engagement,
**characterised in that**
an inclination sensor (10) for detecting a lateral inclination angle of the implement (1), in particular at right angles to a working direction (A), is provided,
**in that** an implement sensor (11) is provided, which is designed and configured for determining in a mounted state of the implement (1) on the traction vehicle (3) a lateral offset (v) between the implement (1), in particular the main frame (4) and the traction vehicle (3), and **in that**
a control unit (15) is provided, through which the at least one ground engagement means (12) is controllable based on the lateral offset (v) of the implement (1) and the determined inclination angle.

2. The implement according to Claim 1,
**characterised in that**
the implement sensor (11) is designed and equipped in such a manner that a lateral offset (v) can be determined by determining an implement angle (α) relative to the attachment device (5) and/or the traction vehicle (3).

3. The implement according to Claim 1 or 2,
**characterised in that**
the attachment device (5) is designed in the form of a three-point powerlift with an upper link (17) and two lower links (16), wherein the in particular substantially horizontal implement angle (α) between the upper link (17) and the implement (1) can be determined.

4. The implement according to any one of the preceding claims,
**characterised in that**
the implement sensor (11) on the implement side is arranged on a bearing point (18) of the upper link (17) and designed and configured in such a manner that the implement angle (α) of the upper link (17) can be mechanically and/or contactlessy determined relative to the implement (1).

5. The implement according to any one of the preceding claims,
**characterised in that**
on the main frame (4) a tool-carrying support frame (6) is arranged, which is configured so as to be laterally displaceable, in particular parallel relative to the main frame (4).

6. The implement according to any one of the preceding claims,
**characterised in that**
at least one steering angle sensor (13) for determining the steering angle of the at least one ground engagement means (12) is provided.

7. The implement according to any one of the preceding claims,
**characterised in that**
the control unit (15) is configured and equipped in such a manner so as to receive and evaluate a control angle of the traction vehicle (3) in a mounted state of the implement (1).

8. The implement according to any one of the preceding claims,
**characterised in that**
at least one actuator for steering the at least one ground engagement means (12) is provided.

9. An implement arrangement (2), including a traction vehicle (3) with an attachment device (5), in particular in the form of a three-point powerlift with two lower links (16) and one upper link (17), and at least one implement (1) arranged on the attachment device (5) according to any one of the preceding claims.

10. A method for lateral guidance of an implement (1) or of an implement arrangement (2) according to any one of the Claims 1 to 9, including the steps:
- determining an inclination angle of the implement (1), in particular at right angles to a working direction (A) of the implement (1),
- determining a lateral offset (v) of the implement (1) mounted on a traction vehicle (3) relative to the traction vehicle (3),
- controlling at least one ground engagement means (12) dependent on the inclination angle and the lateral offset (v) in such a manner that the lateral offset (v) is reduced.

11. The method according to Claim 10,
**characterised in that**
steering of the at least one ground engagement means (12) takes place only when a previously defined threshold value of the inclination angle is exceeded.

12. The method according to any one of the Claims 10 to 11,
**characterised in that**
with an implement (1) mounted on a traction vehicle (3) the lateral offset (v) in the form of an implement angle (α) between an upper link (17) of a three-point powerlift of a traction vehicle (3) and the implement (1) is determined.

13. The method according to any one of the Claims 10 to 12,
**characterised in that**
a steering angle and/or an end position of the steerable ground engagement means (12) are/is determined, in particular via a steering angle sensor (13).

14. The method according to any one of the Claims 10 to 13,
**characterised in that**
a steering angle for the lateral displacement of the implement (1), in particular of the main frame (4), is preset, which is based on a control angle of the traction vehicle (3).

15. The method according to any one of the Claims 10 to 14,
**characterised in that**
a tool-carrying support frame (6) for alignment with a row cultivation (8) is displaced laterally relative to the main frame (4), in particular based on a row sensor (9).

## Revendications

1. Équipement de travail agricole, destiné notamment à traiter des cultures en ligne (8), à être placé sur un dispositif de montage (5) d'un véhicule tracteur (3), l'équipement de travail (1) comportant une pluralité d'outils de traitement (7) du sol, ainsi qu'au moins un châssis de base (4) et au moins un moyen d'engagement (12) dans le sol, placé de manière dirigeable sur le châssis de base (4), lequel lors d'un traitement du sol est en engagement dans le sol, **caractérisé**
**en ce qu'**il est prévu un capteur d'inclinaison (10) destiné à détecter un angle d'inclinaison latéral de l'équipement de travail (1), notamment à angle droit par rapport à une direction de travail (A), en ce qu'il est prévu un capteur d'équipement (11), lequel est réalisé et conçu pour, lorsque l'équipement de travail (1) est monté sur le véhicule tracteur (3), déterminer un décalage (v) latéral entre l'équipement de travail (1), notamment le châssis de base (4) et le véhicule tracteur (3) et en ce qu'il est prévu une unité de commande (15), par laquelle l'au moins un moyen d'engagement (12) dans le sol est susceptible d'être commandé sur la base du décalage (v) latéral de l'équipement de travail (1) et de l'angle d'inclinaison déterminé.

2. Équipement de travail selon la revendication 1, **caractérisé en ce que** le capteur d'équipement (11) est réalisé et conçu de sorte qu'un décalage (v) latéral puisse être déterminé par détermination d'un angle de l'équipement (α) par rapport au dispositif de montage (5) et / ou au véhicule tracteur (3).

3. Équipement de travail selon la revendication 1 ou 2, **caractérisé en ce que** le dispositif de montage (5) est réalisé sous la forme d'un attelage arrière à trois points, pourvu d'un bras de levage (17) supérieur et de deux bras de levage (16) inférieurs, l'angle de l'équipement (α), notamment sensiblement horizontal entre le bras de levage (17) supérieur et l'équipement de travail (1) pouvant être déterminé.

4. Équipement de travail selon l'une quelconque des revendications précédentes, **caractérisé en ce que** le capteur d'équipement (11) est placé sur le côté de l'équipement de travail sur un point d'appui (18) du bras de levage (17) supérieur et est réalisé et conçu de telle sorte, que par voie mécanique et / ou sans contact, l'angle de l'équipement (α) du bras de levage (17) supérieur par rapport à l'équipement de travail (1) puisse être déterminé.

5. Équipement de travail selon l'une quelconque des revendications précédentes, **caractérisé en ce que** sur le châssis de base (4) est placé un châssis de support (6) porteur d'outil, lequel est conçu de sorte à être déplaçable latéralement, notamment à la parallèle, par rapport au châssis de base (4).

6. Équipement de travail selon l'une quelconque des revendications précédentes, **caractérisé en ce qu'**il est prévu au moins un capteur de l'angle de direction (13), destiné à détecter l'angle de direction de l'au moins un moyen d'engagement (12) dans le sol.

7. Équipement de travail selon l'une quelconque des revendications précédentes, **caractérisé en ce que** l'unité de commande (15) est conçue et configurée de sorte à réceptionner et à évaluer au moins un angle de direction et / ou lorsque l'équipement de travail (1) est monté, un angle de commande du véhicule tracteur (3).

8. Équipement de travail selon l'une quelconque des revendications précédentes, **caractérisé en ce qu'**il est prévu au moins un actionneur, destiné à diriger l'au moins un moyen d'engagement (12) dans le sol.

9. Ensemble d'équipement de travail, comprenant un véhicule tracteur (3), pourvu d'un dispositif de montage (5), notamment sous la forme d'un attelage arrière à trois points doté de deux bras de levage (16) inférieurs et d'un bras de levage (17) supérieur et au moins un équipement de travail (1) selon l'une quelconque des revendications précédentes, placé sur le dispositif de montage (5).

10. Procédé, destiné au guidage latéral d'un équipement de travail (1) ou d'un ensemble d'équipement de travail (2) selon l'une quelconque des revendications 1 à 9, comprenant les étapes consistant à :
- déterminer un angle d'inclinaison de l'équipement de travail (1), notamment à angle droit par rapport à une direction de travail (A) de l'équipement de travail (1),
- déterminer un décalage (v) latéral de l'équipement de travail (1) monté sur un véhicule tracteur (3) par rapport au véhicule tracteur (3),
- commander au moins un moyen d'engagement (12) dans le sol en fonction de l'angle d'inclinaison et du décalage (v) latéral, de sorte à réduire le décalage (v) latéral.

11. Procédé selon la revendication 10, **caractérisé en ce qu'**une intervention de direction de l'au moins un moyen d'engagement (12) dans le sol n'a lieu que lors du dépassement d'une valeur seuil préalablement définie de l'angle d'inclinaison.

12. Procédé selon l'une quelconque des revendications 10 à 11, **caractérisé en ce que** lorsqu'un équipement de travail (1) est monté sur un véhicule tracteur (3), le décalage (v) latéral est déterminé sous la forme d'un angle de l'équipement (α) entre un bras de levage (17) supérieur d'un attelage arrière à trois points d'un véhicule tracteur (3) et l'équipement de travail (1).

13. Procédé selon l'une quelconque des revendications 10 à 12, **caractérisé en ce qu'**un angle de direction et / ou une position finale du moyen d'engagement (12) dans le sol dirigeable est déterminé(e), notamment par l'intermédiaire d'un capteur d'angle de direction (13).

14. Procédé selon l'une quelconque des revendications 10 à 13, **caractérisé en ce qu'**un angle de direction pour le déplacement latéral de l'équipement de travail (1), notamment du châssis de base (4) est préréglé, lequel est basé sur un angle de commande de véhicule tracteur (3).

15. Procédé selon l'une quelconque des revendications 10 à 14, **caractérisé en ce qu'**un châssis de support (6) porteur d'outils est déplacé latéralement par rapport au châssis de base (4), pour l'alignement sur une culture en lignes (8), notamment sur la base d'un capteur de lignes (9).
